# EUROPEAN PATENT APPLICATION

(11) **EP 1 775 829 A2**
(43) Date of publication of application: **18.04.2007**
(21) Application number: 06020768.5
(22) Date of filing: 02.10.2006
(51) Int. Cl.: H02P 3/04

(54) **Servo motor stop controlling method and servo motor controller**

(30) Priority: 07.10.2005 JP 2005295053
(71) Applicant: FANUC LTD, Minamitsuru-gun, Yamanashi 401-0597 (JP)
(72) Inventor: Hashimoto, Yoshiki, Hadano-shi Kanagawa 257-0025 (JP); Tanabe, Yoshikiyo Room 101, Fujiyoshida-shi Yamanashi 403-0013 (JP); Hamada, Toshihiko Fanuc Dai3virakaramatsu, Yamanashi 401-0511 (JP)
(74) Representative: Thum, Bernhard

(57) **Abstract**

A servo motor controller is provided with a motor control section for controlling a servo motor provided with a brake. The motor control section includes a speed command portion for outputting a speed command to increase or reduce the rotation of the servo motor, and a brake switching portion for outputting switch command for a braking circuit to switch the brake, wherein the brake is activated during speed reduction of the servo motor by the speed command portion, whereby a rotation of the servo motor is stopped. The motor control section further includes a monitoring portion for monitoring whether or not the decelerating torque of the servo motor during speed reduction exceeds a set value that has been set equal to or lower than a maximum allowable torque of the servo motor in the motor control section.

## Description

### RELATED APPLICATION

The present application is based on, and claims priority from, Japanese Application Number 2005-295053, filed October 7, 2005, the disclosure of which is hereby incorporated, by reference, in its entirety.

### BACKGROUND OF THE INVENTION

### 1. Field of the Invention

The present invention applies generally to a system using a servo motor, such as an industrial robot, a machine tool, a positioning device, etc. More particularly, the present invention relates to a servo motor stop controlling method and a servo motor controller in which the rotation of a servo motor provided with a brake is stopped by means of speed control.

### 2. Description of the Related Art

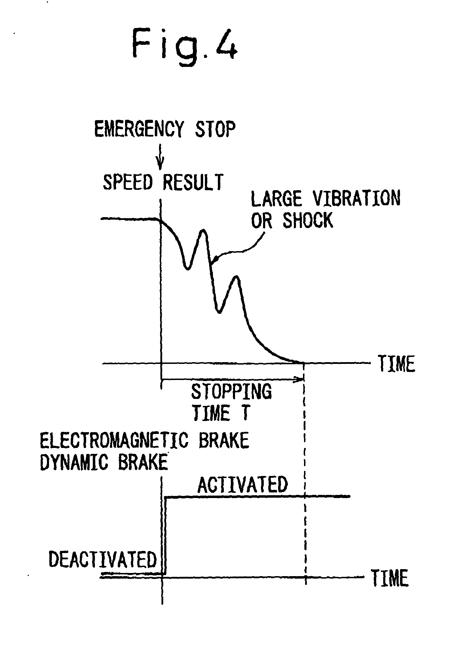

Conventionally, in various systems comprising a servo motor, in order to stop the rotation of a servo motor safely and in as short a time period as possible at the time of an emergency stop, a dynamic brake utilizing regenerative energy of the servo motor and an electromagnetic brake are used in combination for reducing the speed of, and stopping, the servo motor, and after the servo motor has been stopped, the electromagnetic brake is used to hold the movable part in a stopped state. Fig. 4 is a view showing the speed reduction characteristics of a conventional servo motor at the time of an emergency stop, as a relation between the rotation and time, together with the timing for activating a brake.

As shown in Fig. 4, although the stopping time T can be reduced by activating both a dynamic brake and an electromagnetic brake at the time of an emergency stop, it has a problem that a decelerating torque immediately after the emergency stop becomes so large that vibration or shock may be induced during speed reduction. The vibration or shock thus induced corresponds to a disturbance in the curve of the speed reduction characteristics.

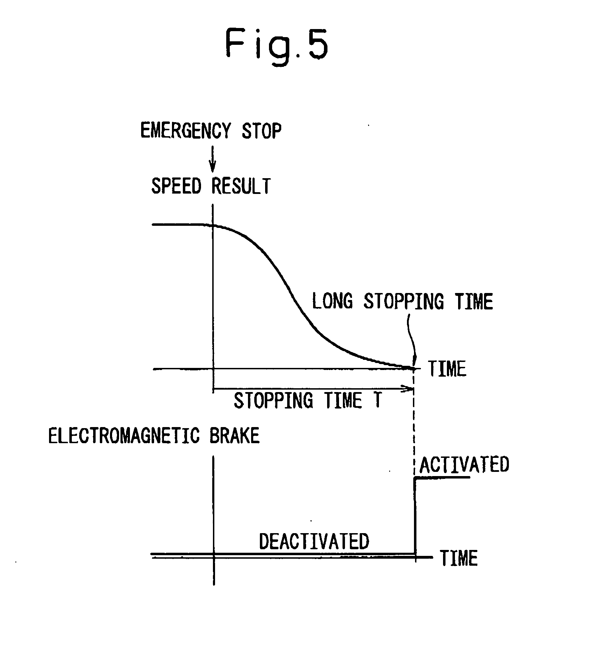

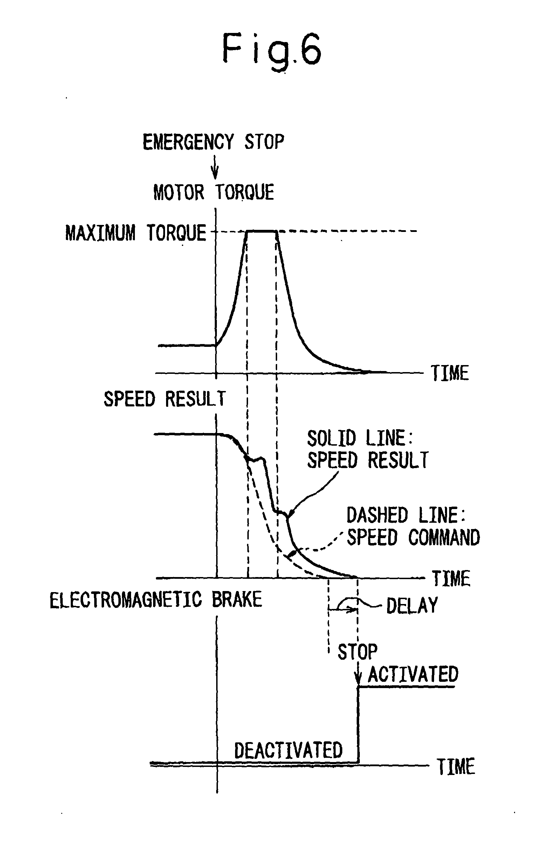

Fig. 5 is a view showing an example of a speed reduction process of a servo motor in which, in order to overcome above-described problem, speed control is used in place of dynamic braking. Fig. 5 shows a case where speed reduction by means of speed control is employed at the time of an emergency stop, and an electromagnetic brake is activated after the rotation of the servo motor is stopped. As can be seen from Fig. 5, although vibration or shock is not produced in this case, and the curve exhibiting the speed reduction characteristics is smooth, the stopping time T of the servo motor is longer. Moreover, smooth speed reduction characteristics are obtained only for the case of an emergency stop of a servo motor under a low load (low speed) conditions. In the case of an emergency stop of a servo motor under a high speed or load conditions, the speed reduction characteristics are disturbed, as shown in Fig. 6.

Fig. 6 is a view showing the torque characteristics and the speed reduction characteristics of a motor together with the timing for activating the electromagnetic brake. A wave-like disturbance in the curve of the speed reduction characteristics are caused by the inadequate torque of the servo motor. In other words, a wave-like disturbance in the curve of the speed reduction characteristics corresponds to a flat portion of the torque characteristics of the servo motor. That is, the decelerating torque required for speed reduction of the servo motor by means of speed control reaches the maximum allowable torque that is intrinsic to the individual servo motor (saturation of the decelerating torque), and thereby it become maybe difficult to accurately control the servo motor. In Fig. 6, the dashed line shows the speed command, and the solid line shows the resulting actual speed. It can be seen that the resulting speed shows a disturbance and the stopping time is longer.

As has been described above, it is possible to stop a servo motor smoothly by speed control of the servo motor. However, there is a problem that, when a servo motor is quickly stopped from the state of high speed or high load of the servo motor, the decelerating torque saturates and the servo motor may become difficult to accurately control the servo motor and give rise to vibration and delay in response to a control command. Thus, although, in an emergency stop from the state of low speed or low load, it is possible to stop the rotation of servo motor in a short time period by speed control, there is a problem that, in an emergency stop from the condition of nearly maximum speed or maximum load, the servo motor may be unable to provide adequate torque and thus may give rise to vibration or delay in the response to a control signal.

### SUMMARY OF THE INVENTION

It is an object of the present invention to solve the above-described problem and to provide a servo motor stop controlling method and a servo motor controller that is capable of stopping the rotation of a servo motor, in case of an emergency stop, in a shorter stop time with a reduced stopping distance.

To accomplish the above objects, the present invention provides a servo motor stop controlling method for stopping the rotation of a servo motor provided with a brake, which comprises activating the brake, during speed reduction of the servo motor, by means of a speed control.

According to the present invention, there is further provided a servo motor controller comprising a motor control section for controlling a servo motor provided with a brake, the motor control section comprising: a speed command portion for outputting a speed command to stop a rotation of the servo motor, and a brake switching portion for outputting a switch command for a braking circuit to switch the brake, wherein the brake is activated by the brake switching portion during speed reduction of the servo motor by the speed command portion, and the rotation of the servo motor is stopped.

### BRIEF DESCRIPTION OF THE DRAWINGS

These and other objects and features of the present invention will become clearer from the following description of the preferred embodiments given with reference to the attached drawings, wherein:
Fig. 1 is a view showing the construction of a servo motor controller according to an embodiment of the present invention;
Fig. 2 is a view showing the torque characteristics and the speed reduction characteristics together with the timing of activating of the electromagnetic brake;
Fig. 3 is a flow chart showing the process of a stop control by the servo motor controller;
Fig. 4 is a view showing an example of the speed reduction characteristics of the motor together with the timing of activating of a dynamic brake and an electromagnetic brake in a conventional servo motor controller;
Fig. 5 is a view showing another example of the speed reduction characteristics of the motor together with the timing of activating of an electromagnetic brake in a conventional servo motor controller; and
Fig. 6 is a view showing the torque characteristics and the speed reduction characteristics of the motor together with the timing of activating of an electromagnetic brake in a conventional servo motor controller.

### DETAILED DESCRIPTION

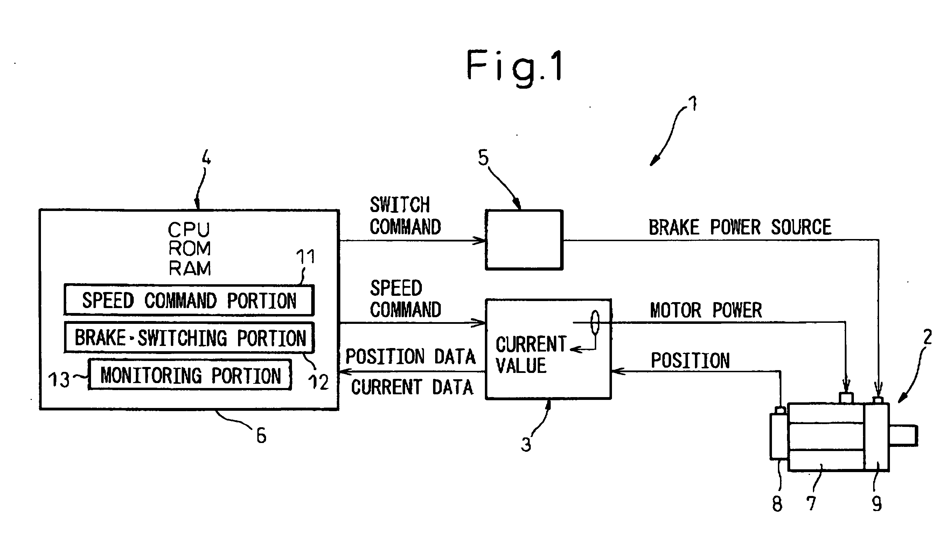

Next, the present invention will be described, in detail, with reference to drawings showing specific examples of embodiments thereof. Fig. 1 is a view showing the construction of a servo motor controller according to the present invention.

A servo motor controller 1 according to the present embodiment is a controller for controlling a servo motor 2 for rotationally driving a joint portion of an unshown multi-joint type industrial robot, including a servo amplifier 3 for supplying a controlled current to the servo motor 2, a motor control section 4 electrically interconnected to the servo motor 2 via the servo amplifier 3, and a braking circuit 5 controlled by the motor control section 4 for ON/OFF switching of an electromagnetic brake (brake) 9.

The servo motor 2 comprises a motor main body 7, an encoder 8 as a position detector for detecting the position information of the motor, and an electromagnetic brake 9 which functions as a frictional brake and a holding brake. The joint portion as a movable part is adapted to be driven by the servo motor 2 via an unshown speed reduction gear to increase output torque by reducing the rotation of the servo motor.

The electromagnetic brake is mainly activated after the rotation of the servo motor 2 is stopped and functions as a so-called holding brake. In the present invention, it is also used to function as a frictional brake during speed reduction of the servo motor 2. It is assumed that decelerating torque of the brake when used as a frictional brake is equal to or smaller than the maximum allowable torque of the motor.

Although the servo motor 2 of the present embodiment is described as applied to an industrial robot, it can also be applied to a horizontal axis displacing apparatus using a linear motor, a positioning apparatus using a servo motor and reduction gear, or to driving of feed axis, comprising a ball screw and a nut, of a machine tool.

The servo amplifier 2 is a controller for accelerating, decelerating and stopping the servo motor 2 based on a speed command from the motor control section 4. When the servo motor is to be decelerated and stopped, the speed command "0" is used, for example, to control the servo motor 2 in a speed reduction control.

The motor control section 4 comprises an unshown controller, an unshown shared memory, and a digital servo-circuit 6. A position command, etc. from the controller is transmitted via the shared memory to the digital servo-circuit 6. Conversely, an error signal from the digital servo-circuit 6 is transmitted via the shared memory to the controller. Thus, transmission and reception are permitted in both direction via the shared memory between the controller and the digital servo-circuit 6.

The digital servo-circuit 6 comprises an I/O circuit having electronic parts such as a CPU, ROM and RAM mounted thereon, of which, together with a control program, the speed command portion 11, the brake switching portion 12, and the monitoring portion 13 are composed. Position data from the encoder 8 are inputted to CPU, and speed data of the servo motor 2 are obtained by differentiating the position data. The value of motor current is also inputted from the servo amplifier 3 to CPU, and torque data for the motor 2 are obtained based on this current value.

The speed command portion 11 constitutes a speed feedback circuit, and calculates the speed command value to be instructed to the motor 2 based on a position data, a speed data, and a torque data, and thus controls the servo motor 2 via the servo amplifier 3. The maximum allowable current is defined, by software, as the current supplied to the servo motor 2. When the instructed motor current exceeds the maximum allowable current, the program has the function of clamping the motor current so as not to exceed the maximum allowable current. When this function is operated, it is determined that the torque has saturated.

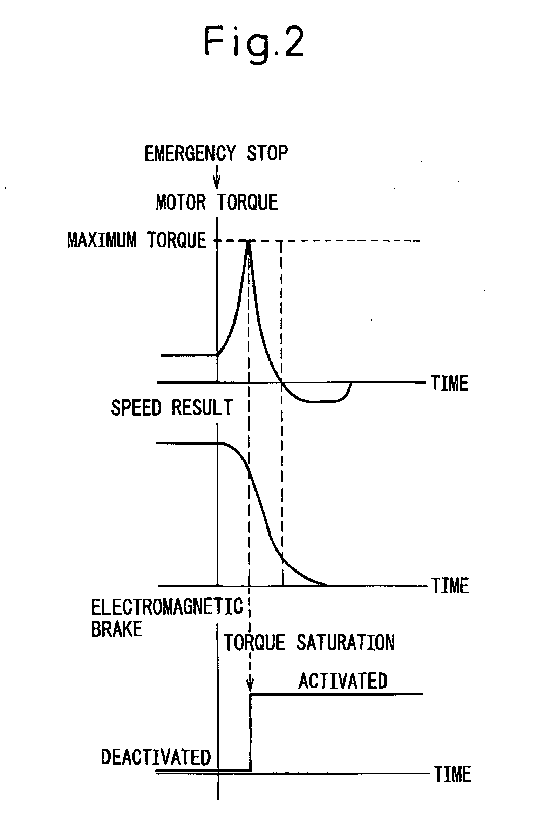

For example, in the stop control of the servo motor 2, the speed command is "0", and as a result, the torque command (current command) calculated by a feedback process is such that the servo motor 2 is driven in the reverse direction. The speed of the servo motor 2 is reduced by a specified decelerating torque, and the servo motor is stopped. In the case of an emergency stop in which the servo motor 2 is stopped from the state of rotation under maximum load, the torque command value (the decelerating torque) is kept to the maximum allowable torque. In the present invention, the electromagnetic brake 9 is activated during a period when the torque command value (the braking torque) is kept to the maximum allowable torque (Fig. 2), so that the torque is decreased, during speed reduction, to prevent vibration or shock from being produced.

The electromagnetic brake 9 can be switched between an activated state and an deactivated state of the electromagnetic brake 9 by switching the braking circuit ON or OFF with the brake switching portion 12 based on the torque command value that is being monitored by the monitoring portion 13.

The above-mentioned monitoring portion 13 is means for monitoring whether or not the torque command value during speed reduction of the servo motor 2 exceeds a set value that has been, in advance, set equal to or lower than the maximum allowable torque of the servo motor. The set value that has been set in the motor controller portion is based on the maximum allowable torque of the motor. By selecting a set value that is smaller than the maximum allowable torque, it is possible to enable the brake in an early stage. This value is adjusted and determined so as to reduce a stopping distance and to stabilize a deceleration control.

The above-mentioned brake switching portion 12 is means for outputting a switching command for the braking circuit 5 to switch the electromagnetic brake 9. Examples of the braking circuit include an electric circuit having a transistor and a relay, etc.

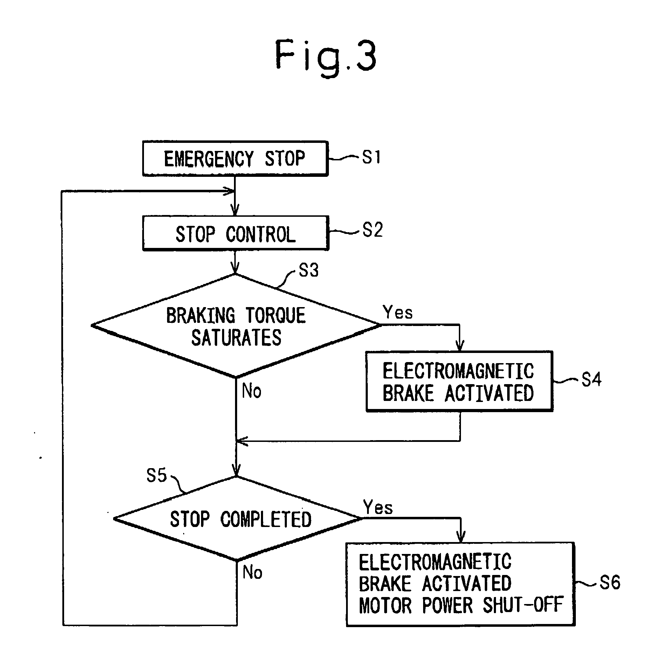

Next, a processing flow of a servo motor stop controller at the time of an emergency stop will be described with reference to Fig. 3. The servo motor stop controller 1 performs stop control when an emergency stop instruction is inputted at step S1. If the rotation of the servo motor 2 at the time of the emergency stop instruction is low, that is, if the servo motor 2 is rotating at a low speed, the decelerating torque of the servo motor is not saturated by the stop control at step S2, and the servo motor can be stopped in a short time without producing vibration or shock even if the electromagnetic brake remains disabled. By activating the electromagnetic brake after the stop of the rotation, vibration or shock at the time of stopping can be eliminated, and the servo motor can be held in a stopped state.

On the other hand, if the speed of the motor at the time of the emergency stop instruction is high, that is, if the servo motor 2 is rotating at a high speed, saturation of the servo motor 2 is detected at step S3 (Fig. 2), and at step S4, when the decelerating torque is saturated, the electromagnetic brake 9 is activated, and the saturated state of the decelerating torque discontinue thereby. At step S5, it is determined whether or not the stopping of the servo motor has been completed. If it is determined that the stopping has been completed, motor power is shut off at step S6, with the electromagnetic brake 9 remaining enabled. Thus, if the speed of the motor at the time of the emergency stop instruction is high, saturation of the decelerating torque can be avoided with the assistance of the electromagnetic brake 9, and the servo motor can be stopped smoothly in a short time.

As has been described above, in accordance with the present embodiment, by activating the electromagnetic brake 9 during speed reduction of the servo motor 2, it is possible to use deceleration with speed control and braking by the electromagnetic brake 9 in combination to thereby increase the braking force on the servo motor and stop the servo motor within the maximum allowable torque of the servo motor 2. Therefore, in an emergency stop, the servo motor can be stopped in short time without producing vibration or shock.

This embodiment of the present invention can be implemented in many ways. For example, in place of the monitoring portion for monitoring the decelerating torque during speed reduction of the servo motor 2, a monitoring portion for monitoring an error between the speed command value instructed by the speed command portion and the actual rotation of the servo motor 2, or a monitoring portion for monitoring an error between the position command value obtained by integrating the speed command value instructed by the speed command portion and the actual position of the servo motor 2, may be employed.

It is also possible to activate the electromagnetic brake during speed reduction of the servo motor 2, and to deactivate the electromagnetic brake after the load on the motor is reduced and the torque is decreased in order to stop the servo motor solely by deceleration with the speed control of the servo motor, and to enable the electromagnetic brake again after the servo motor has been stopped. In this manner, a control required for compensating excessive braking can be eliminated.

While the invention has been described with reference to specific embodiments chosen for purpose of illustration, it should be apparent that numerous modifications could be made thereto by those skilled in the art without departing from the basic concept and scope of the invention.

## Claims

1. A servo motor stop controlling method for stopping a rotation of a servo motor (2) provided with a brake (9),
**characterized in that** the servo motor stop controlling method comprises activating the brake (9), during speed reduction of the servo motor (2), by means of a speed control,
whereby a rotation of the servo motor (2) is stopped.

2. A servo motor stop controlling method according to claim 1,
**characterized in that** the rotation of the servo motor (2) is stopped within maximum allowable torque of the servo motor (2).

3. A servo motor stop controlling method according to claim 2,
**characterized in that** a decelerating torque of the servo motor (2) is compared with a set value that has been set equal to or lower than maximum allowable torque of the servo motor (2) in the motor control section (4), and the brake (9) is activated when the decelerating torque exceeds the set value.

4. A servo motor controller comprising a motor control section (4) for controlling a servo motor (2) provided with a brake (9), the motor control section (4) including a speed command portion (11) for outputting a speed command to stop a rotation of the servo motor (2),
**characterized in that** the motor control section (4) includes a brake switching portion (12) for outputting a switch command for a braking circuit (5) to switch the brake (9),
wherein the brake (9) is activated by the brake switching portion (12) during speed reduction of the servo motor (2) by the speed command portion (12), and the rotation of the servo motor is stopped.

5. A servo motor controller according to claim 4,
wherein the rotation of the servo motor (2) is stopped within a maximum allowable torque of the servo motor (2).

6. A servo motor controller according to claim 5,
wherein the motor control section (4) further comprises a monitoring portion (13) for monitoring whether or not a decelerating torque of the servo motor (2) during speed reduction exceeds a set value that has been set equal to or lower than a maximum allowable torque of the servo motor (2) in the motor control section (4), the brake is activated by the brake switching portion (12) when it is detected by the monitoring portion (13) that the decelerating torque exceeds the set value.

7. A servo motor controller according to claim 5,
wherein the motor control section (4) further comprises a monitoring portion for monitoring an error between a speed command value instructed by the speed command portion (11) and a actual speed of the servo motor (2) and the brake (9) is activated by the brake switching portion (12) when the error is found to be larger than a set value in the motor control section (4).

8. A servo motor controller according to claim 5,
wherein the motor control section (4) further comprises a monitoring portion for monitoring an error between a position command value obtained by integrating a speed command value instructed by the speed command portion (11) and an actual position of the servo motor (2), the brake (9) is activated by the brake switching portion (12) when the error is found to be larger than a set value in the motor control section (4).

9. A servo motor controller according to claim 6,
wherein, after the breaking torque is decreased to less than the set value by a braking assistance of the brake (9), the brake (9) is deactivated by the brake switching portion (12) and the servo motor (2) is stopped only by a deceleration of the speed command portion (11).
